# EUROPÄISCHE PATENTSCHRIFT

(11) **EP 1 886 037 B1**
(45) Veröffentlichungstag und Bekanntmachung des Hinweises auf die Patenterteilung: **21.12.2016**
(21) Anmeldenummer: 06753765.4
(22) Anmeldetag: 22.05.2006
(51) Int. Cl.: F16C 33/12, B32B 15/01, C22C 21/00, C22C 21/02, C22C 21/12, C22F 1/04, C22F 1/043, C22F 1/057, F16C 33/14

(54) **GLEITLAGERVERBUNDWERKSTOFF UND VERFAHREN ZUR HERSTELLUNG DES GLEITLAGERVERBUNDWERKSTOFFES**
ANTIFRICTION COMPOSITE AND METHOD FOR PRODUCING THE ANTIFRICTION COMPOSITE
MATÉRIAU COMPOSITE DE PALIER À GLISSEMENT ET PROCÉDÉ DE FABRICATION DE CE MATÉRIAU

(30) Priorität: 21.05.2005 DE 102005023541
(43) Veröffentlichungstag der Anmeldung: 13.02.2008
(73) Patentinhaber: Federal-Mogul Wiesbaden GmbH, 65201 Wiesbaden (DE)
(72) Erfinder: NEUHAUS, Peter, 65366 Geisenheim (DE)
(74) Vertreter: Mehler Achler
(86) Internationale Anmeldenummer: PCT/EP2006/004832
(87) Internationale Veröffentlichungsnummer: WO 2006/125584

(56) Entgegenhaltungen:
- WO-A-97/30845
- US-A- 5 112 416
- US-A1- 2002 104 876
- US-A1- 2003 012 977
- PATENT ABSTRACTS OF JAPAN Bd. 1999, Nr. 13, 30. November 1999 (1999-11-30) -& JP 11 229060 A (NDC CO LTD), 24. August 1999 (1999-08-24)

## Beschreibung

Die Erfindung betrifft einen Gleitlagerverbundwerkstoff gemäß Oberbegriff des Patentanspruchs 1. Die Erfindung bezieht sich auch auf ein Verfahren zur Herstellung des Gleitlagerverbundwerkstoffes.

Aus der DE 40 04 703 A1 ist ein Schichtwerkstoff für Gleitlagerelemente bekannt, der eine metallische Stützschicht und einen Lagerwerkstoff auf Aluminiumbasis aufweist. Die Aluminiumlegierung weist 1 - 3 Gew.% Nickel, 0,5 - 2,5 Gew.% Mangan, 0,02 - 1,5 Gew.% Kupfer, 0,5 - 20 Gew.% Zinn und Rest Aluminium mit den üblichen Verunreinigungen auf. Ferner enthält die Lagerlegierung Hartteilchen im Wesentlichen in Teilchengrößen ≤ 5 μm in bestimmten Anteilen.

Bei diesem Schichtwerkstoff ist als Option eine Zwischenschicht aus Rein-Aluminium vorgesehen, die die Bindung zwischen dem Stahlrücken und dem Lagerwerkstoff verbessern soll. Dieses Gleitlagerverbundmaterial hat gute Ermüdungsfestigkeitswerte bei einer Belastung bis 80 MPa, gute Verschleißfestigkeiten und gute Fresssicherheitswerte.

Bei Verwendung dieses Gleitlagerverbundwerkstoffes mit ReinAluminium als Zwischenschicht bei höheren Belastungen, also bei Belastungen über 80 MPa hinaus, hat sich herausgestellt, dass das Material, insbesondere das der Zwischenschicht, bei Schichtdicken > 80 μm seitlich ausweicht, was durch Vergrößerung der Lagerbreite zu einem störenden axialen Überstand bei Lagerschalen oder Lagerbuchsen führt und dadurch sogar zum Ausfall des Motors führen kann.

Aus der DE 36 40 328 A1 ist ein Schichtwerkstoff für Gleitlagerelemente bekannt, der eine Aluminiumlegierung aufweist, die sich von der Aluminiumlegierung der DE 40 04 703 A1 durch das Fehlen des Zinnanteils unterscheidet.

Diese Aluminiumlagerlegierung wird als Lagerwerkstoff verwendet, der Belastbarkeiten bis 80 MPa zulässt, bis Ermüdungsrisse in der Lagermaterialschicht feststellbar sind.

Die US 2002/0104876 A1 beschreibt einen Schichtverbundwerkstoff mit Stahlrücken, mit einer aluminiumbasierten Zwischenschicht mit einer Dicke von 60-120 μm und mit einer Lagermetallschicht aus einer Aluminiumlegierung. Die Lagermetallschicht enthält 4-20 % Blei oder Zinn, bis 26 % Silizium, bis 2 % Magnesium, Mangan, Nickel, Zink, Kupfer oder Chrom. Die Zwischenschicht besteht vorzugsweise aus Reinaluminium oder einer Aluminiumlegierung wie z.B. AlMnCu1. Die Ermüdungsfestigkeit des Schichtverbundwerkstoffes liegt bei max. 100 MPa. Die Zwischenschicht wird mit der Lagermetallschicht über einen Warmwalzplattierprozess verbunden.

Aus der US 5112416 A sind Lager bekannt, die aus einem Lager auf Aluminiumbasis, einer gehärteten Verbindungszwischenschicht und einem Stahlrücken bestehen, wobei die Härte der Verbindungszwischenschicht in einem Bereich zwischen 40% und 70% der Vickershärte der Lagerschicht auf Aluminiumbasis liegt und wobei die Lagerschicht auf Aluminiumbasis, eine Dicke zwischen 0,2 und 1 mm aufweist. Die Verbindungszwischenschicht besteht aus wenigstens einem der Materialien Mangan, Cupfer, Zinn, Silizium und Magnesium mit Gewichtsprozenten zwischen 0,3 und 5 %, Rest Aluminium und den üblichen Verunreinigungen.

Allen Schichtverbundwerkstoffen ist der fertigungstechnische Nachteil gemeinsam, dass das Material für die Zwischenschicht und das Material für die Lagerschicht nicht ohne erheblichen Aufwand auf derselben Gießanlage hergestellt werden können.

Aufgabe der Erfindung ist ein Gleitlagerverbundwerkstoff, der mindestens dieselben Ermüdungsfestigkeitswerte wie die bekannten Gleitlagerverbundwerkstoffe aufweist und der fertigungstechnisch einfacher herstellbar ist.

Diese Aufgabe wird mit einem Gleitlagerverbundwerkstoff mit einer metallischen Stützschicht, einer Zwischenschicht aus einer Aluminiumlegierung und einer Lagerschicht aus einer Aluminiumlegierung gelöst, wobei die Komponenten der Aluminiumlegierungen von Zwischenschicht und Lagerschicht bis auf einen zusätzlichen Weichphasenanteil in der Lagerschicht übereinstimmen und wobei die Aluminiumlegierung der Zwischen- und Lagerschicht 1,0 - 3 Gew.-% Ni, 0,5 - 2,5 Gew.-% Mn, 0,02 - 1,5 Gew.-% Cu, Rest Aluminium mit den üblich zulässigen Verunreinigungen und die Aluminiumlegierung der Lagerschicht zusätzlich den Weichpilasenanteil aufweist.
Die Übereinstimmung der Komponenten der beiden Aluminiumlegierungen ermöglicht es, beide Legierungen auf ein und derselben Gießanlage zu verarbeiten, ohne dass ein zeitaufwendiger Reinigungsprozess bei der Umstellung von der einen auf die andere Legierung zwischengeschaltet werden muss.

Besonders einfach wird das Herstellungsverfahren auf derselben Gießanlage, wenn die Mengen der dem Aluminium zugesetzten Komponenten der Aluminiumlegierungen der Zwischenschicht und der Aluminiumlegierung der Lagerschicht bis auf den zusätzlichen Weichphasenanteil in der Lagerschicht übereinstimmen. Der Weichphasenanteil in der Lagerschicht geht zu Lasten des Aluminiumanteils in der Aluminiumlegierung. Es kann daher zuerst das Material für die Zwischenschicht gegossen werden, wobei zur Herstellung des Lagerschichtmaterials lediglich der zusätzliche Weichphasenanteil zu der bisher verarbeiteten Aluminiumlegierung zugegeben und der Aluminiumanteil um den gleichen Anteil verringert werden muss.

Als Weichphasenanteile sind Blei, Zinn und/oder Wismut bevorzugt.

Der Weichphasenanteil liegt vorzugsweise bei 5 - 20 Gew.-% bezogen auf die gesamte Aluminiumlegierung, insbesondere bei 8 - 15 Gew.-% und insbesondere bei ≥ 8 - 12 Gew.-%.

Bei der Verwendung von Zinn als Weichphasenanteil ist ein Bereich von 9-11 Gew.-% besonders bevorzugt.

Es hat sich gezeigt, dass die Ermüdungsfestigkeit der Gleitlagerverbundwerkstoffe über 80 MPa liegt, ohne dass die Zwischenschicht, wie es bei Reinaluminiumzwischenschichten der Fall ist, seitlich herausgedrückt wird.

Es ist von Vorteil, wenn die Zwischenschicht Hartteilchen mit Durchmessern von 1 - 10 μm und die Lagerschicht Hartteilchen mit Durchmessern von 1 - 15 μm aufweist. Hierbei liegt der Anteil der Hartteilchen mit Durchmessern bis 10 μm in der Zwischenschicht vorzugsweise bei bis zu 95% und der Anteil der Hartteilchen mit Durchmessern bis 15μm in der Lagerschicht bei bis zu 95%.

Die Hartteilchen umfassen Si-Partikel sowie intermetallische Phasen aus AlNi, AlNiMn oder AlMn.

Der Vorteil dieser Anteile an Hartteilchen besteht darin, dass die Aluminiummatrix sowohl der Lagermetall- als auch der Zwischenschicht verfestigt wird und somit durch die erhöhte Festigkeit und Abriebfestigkeit die Belastbarkeit und Ermüdungsfestigkeit des Lagermetallverbundes verbessert wird.

Es hat sich gezeigt, dass die Ermüdungsfestigkeit des Gleitlagerverbundwerkstoffs von der Dicke der Zwischenschicht abhängt. Es hat sich herausgestellt, dass bei einer Dicke der Zwischenschicht von 15-60 μm, insbesondere von 35 - 50 μm und insbesondere von 35 - <50 μm die Ermüdungsfestigkeit noch etwas höher liegt als bei größeren Dicken der Zwischenschicht, wobei Werte für die Ermüdungsfestigkeit über 100 MPa erreicht werden können.

Wird die Dicke der Zwischenschicht auf die Dicke der Lagerschicht bezogen, so haben sich Werte von 5 - 20% insbesondere von 7-17% als bevorzugt herausgestellt.

In der nachfolgenden Tabelle sind fünf Legierungsbeispiele in Verbindung mit unterschiedlichen Zwischenschichtdicken zusammengefasst, wobei jeweils die Ermüdungsfestigkeit nach dem Sapphireverfahren ermittelt wurde.

| Beispiel | Chemische Zusammensetzung Lagerlegierung | Chemische Zusammensetzung Zwischenschicht | Dicke Zwischenschicht (μm) | Ermüdungsfestigkeit (MPa) |
|---|---|---|---|---|
| 1 | AlSn10Ni2Mn1Cu | Al 99,5 | 60 | 116 |
| 2 | " | Al 99,5 | 35 | 76 |
| 3 | " | AlNi2Mn1Cu | 120 | 82 |
| 4 | " | AlNi2Mn1Cu | 75 | 86 |
| 5 | " | AlNi2Mn1Cu | 35 | 112 |

Die Beispiele betreffen eine Lagerlegierung aus AlSn10Ni2Mn1Cu, wobei gemäß der Beispiele 1 und 2 eine Reinaluminiumschicht vorgesehen ist, deren Dicke bei 60 bzw. 35 μm liegt. Im Beispiel 1 wird eine vorgetäuschte Ermüdungsfestigkeit von 116 MPa erreicht, wobei hier sich die Aluminiumschicht deutlich verbreitert hat. Der seitliche Überstand der Aluminiumschicht über die Lagerbreite erreicht hierbei Werte von mehr als 500 μm.

Bei geringeren Schichtdicken der Reinaluminiumzwischenschicht werden auch nur geringere Ermüdungsfestigkeiten erreicht, die in dem Beispiel 2 bei 76 MPa liegt.

Aus den erfindungsgemäßen Beispielen ist zu entnehmen, dass mit Abnahme der Zwischenschichtdicke eine Zunahme der Ermüdungsfestigkeit auftritt, wobei bei einer Dicke von 35 μm ein Wert von 112 MPa erzielt wird.

Vorzugsweise besteht zwischen der Zwischenschicht und der Lagerschicht eine Walzplattierverbindung. Auch besteht zwischen der Lagerschicht und der metallischen Stützschicht vorzugsweise ebenfalls eine Walzplattierverbindung.

Aufgrund dieser hervorragenden Eigenschaften eignet sich der Gleitlagerverbundwerkstoff insbesondere für Gleitlagerelemente, insbesondere Gleitlagerschalen, Gleitlagerbuchsen und/oder Anlaufscheiben sowie für die Herstellung solcher Gleitlagerelemente.

Eine besondere Verwendung ist für Anwendungsfälle mit Belastungen 80 MPa, insbesondere > 100 MPa vorgesehen. Ferner eignen sich die erfindungsgemäßen Gleitlagerverbundwerkstoffe für Rotationsanwendungen mit Gleitgeschwindigkeiten bis 21 m/sec.

Das Herstellungsverfahren ist gekennzeichnet durch folgende Verfahrensschritte:
- Bandgießen der Aluminiumlegierungen für Zwischenschicht zur Herstellung eines Zwischenschichtbandes,
- Darauf folgend Bandgießen der Aluminiumlegierung für die Lagerschicht zur Herstellung eines Lagerschichtbandes auf derselben Gießanlage, wobei die Legierungskomponenten der Aluminiumlegierungen von Zwischenschicht und Lagerschicht bis auf einen zusätzlichen Weichphasenanteil in der Lagerschicht übereinstimmen,
- Glühen des Zwischenschichtbandes bei 400 - 500°C bei einer Zeitdauer von 10-14 Stunden und Glühen des Lagerschichtbandes bei einer Temperatur von 400 - 600°C über eine Zeitdauer von 10-24 Stunden,
- Abwalzen des Zwischenschichtbandes auf Plattierdicke,
- Glühen des Zwischenschichtbandes bei 250 - 350°C über 8 - 14h,
- Walzplattieren zum Verbinden der Zwischenschicht- und Lagerschichtbänder zur Herstellung eines Verbundes,
- Walzen des Verbundes auf die gewünschte Plattierdicke,
- Walzplattieren des Verbundes auf eine Stahlstützschicht zur Herstellung des Verbundwerkstoffes und
- Glühen des Verbundwerkstoffes bei 250 - 350°C über 10-24h.

Hierbei wird das Bandgießen der Aluminiumlegierungen vorzugsweise auf ein und derselben Gießanlage durchgeführt, wobei vorzugsweise zunächst die Zwischenschicht und anschließend durch Zugabe des Weichphasenanteils und entsprechende Reduzierung des Aluminiumanteils das Lagerschichtmaterial als Band gegossen wird.

Vorzugsweise wird das Glühen des Zwischenschichtbandes bei 450-480°C durchgeführt. Bevorzugte Zeitdauern sind 11 - 13h. Das Glühen des Lagerschichtbandes wird vorzugsweise bei 450 - 550°C durchgeführt. Bevorzugte Zeitdauern liegen hier bei 12 - 20h insbesondere bei 15 - 18h.

Im Rahmen des Abwalzens des Zwischenschichtbandes auf Plattierdicke kann zusätzlich ein Zwischenglühen bei 400 - 600°C über 10 - 14h insbesondere bei 500- 550°C über 11 - 13h durchgeführt werden. Dieses zusätzliche Glühen hat den Vorteil, dass die Hartteilchen weiter eingeformt werden, was somit zur Verringerung der Kerbwirkung der Hartpartikel auf die umgebende Matrix beiträgt.

Bezüglich des Glühens des Zwischenschichtbandes vor dem Plattieren mit dem Lagerschichtband sind Temperaturen von 300 - 330°C bevorzugt. Bevorzugte Zeitdauern sind 10 - 12h.

Nach dem Walzplattieren des Verbundes auf eine Stahlstützschicht erfolgt das Glühen bei 250 - 350°C, vorzugsweise 250 - 300°C über 10 - 24h, insbesondere 12 - 20h.

Die Aluminiumlegierungen weisen insbesondere kein Element aus der Gruppe der Seltenerdelemente, der Lanthanoide oder der Actinoide auf. Es hat sich gezeigt, dass insbesondere durch die Zugabe von größeren Mengen dieser Elemente, d. h. insbesondere in der Größenordnung von 10 Gew.% die Herstellung des Gleitlagerverbundwerkstoffs durch Plattieren wegen der erforderlichen hohen Verformungsgrade nicht problemlos realisierbar ist.

## Patentansprüche

1. Gleitlagerverbundwerkstoff mit einer metallischen Stützschicht, einer Zwischenschicht aus einer Aluminiumlegierung und einer Lagerschicht aus einer Aluminiumlegierung, wobei die Legierungskomponenten der Aluminiumlegierungen von Zwischenschicht und Lagerschicht bis auf einen zusätzlichen Weichphasenanteil in der Lagerschicht übereinstimmen,
**dadurch gekennzeichnet,**
**dass** die Aluminiumlegierungen von Zwischen- und Lagerschicht 1,0-3 Gew.% Nickel, 0,5 - 2,5 Gew.% Mangan, 0,02 - 1,5 Gew.% Kupfer, Rest Aluminium mit den üblichen zulässigen Verunreinigungen aufweist, wobei die Aluminiumlegierung der Lagerschicht zusätzlich den Weichphasenanteil aufweist.

2. Gleitlagerverbundwerkstoff nach Anspruch 1,
**dadurch gekennzeichnet,**
**dass** die Mengen der Legierungskomponenten der Aluminiumlegierung der Zwischenschicht und der Aluminiumlegierung der Lagerschicht bis auf den zusätzlichen Weichphasenanteil in der Lagerschicht übereinstimmen, wobei der Weichphasenanteil in der Lagerschicht zu Lasten des Aluminiumanteils in der Aluminiumlegierung geht.

3. Gleitlagerverbundwerkstoff nach Anspruch 1 oder 2,
**dadurch gekennzeichnet, dass** der Weichphasenanteil Blei, Zinn und/oder Wismut umfasst.

4. Gleitlagerverbundwerkstoff nach einem der Ansprüche 1 bis 3,
**dadurch gekennzeichnet, dass** der Weichphasenanteil 5-20 Gew.% beträgt.

5. Gleitlagerverbundwerkstoff nach Anspruch 4,
**dadurch gekennzeichnet, dass** der Weichphasenanteil 8-15 Gew.% beträgt.

6. Gleitlagerverbundwerkstoff nach einem der Ansprüche 1 bis 5,
**dadurch gekennzeichnet, dass** der Weichphasenanteil > 8 - 12 Gew.% beträgt.

7. Gleitlagerverbundwerkstoff nach einem der Ansprüche 1 bis 6,
**dadurch gekennzeichnet, dass** der Anteil des Zinns 9-11 Gew.% beträgt.

8. Gleitlagerverbundwerkstoff nach einem der Ansprüche 1 bis 7,
**dadurch gekennzeichnet, dass** die Zwischenschicht Hartteilchen mit Durchmessern von 1 bis 10 μm und die Lagerschicht Hartteilchen mit Durchmessern von 1 bis 15 μm aufweist.

9. Gleitlagerverbundwerkstoff nach Anspruch 8,
**dadurch gekennzeichnet, dass** der Anteil der Hartteilchen mit Durchmessern bis 10 μm in der Zwischenschicht bis 95% beträgt und dass der Anteil der Hartteilchen mit Durchmessern bis 15 μm in der Lagerschicht bis 95% beträgt.

10. Gleitlagerverbundwerkstoff nach einem der Ansprüche 8 oder 9,
**dadurch gekennzeichnet, dass** die Hartteilchen Si-Partikel und intermetallische Phasen aus Al-Ni, Al-Ni-Mn oder Al- Mn umfassen.

11. Gleitlagerverbundwerkstoff nach einem der Ansprüche 1 bis 10,
**dadurch gekennzeichnet, dass** die Dicke der Zwischenschicht 15 - 60 μm beträgt.

12. Gleitlagerverbundwerkstoff nach Anspruch 11,
**dadurch gekennzeichnet, dass** die Dicke der Zwischenschicht 35 - <50 μm beträgt.

13. Gleitlagerverbundwerkstoff nach einem der Ansprüche 1 bis 12,
**dadurch gekennzeichnet, dass** die Dicke der Zwischenschicht 5-20 % der Lagerschichtdicke beträgt.

14. Gleitlagerverbundwerkstoff nach Anspruch 13,
**dadurch gekennzeichnet, dass** die Dicke der Zwischenschicht 7 - 17 % der Lagerschichtdicke beträgt.

15. Gleitlagerverbundwerkstoff nach einem der Ansprüche 1 bis 14,
**dadurch gekennzeichnet, dass** zwischen der Zwischenschicht und der Lagerschicht eine Walzplattierverbindung besteht.

16. Gleitlagerverbundwerkstoff nach einem der Ansprüche 1 bis 15,
**dadurch gekennzeichnet, dass** zwischen der Zwischenschicht und der metallischen Stützschicht eine Walzplattierverbindung besteht.

17. Verfahren zur Herstellung eines Gleitlagerverbundwerkstoffes mit einer metallischen Stützschicht, einer Zwischenschicht aus einer Aluminiumlegierung und einer Lagerschicht aus einer Aluminiumlegierung,
**gekennzeichnet durch** folgende Verfahrensschritte:
- Bandgießen der Aluminiumlegierungen für Zwischenschicht zur Herstellung eines Zwischenschichtbandes,
- Darauf folgend Bandgießen der Aluminiumlegierung für die Lagerschicht zur Herstellung eines Lagerschichtbandes auf derselben Gießanlage, wobei die Legierungskomponenten der Aluminiumlegierungen von Zwischenschicht und Lagerschicht bis auf einen zusätzlichen Weichphasenanteil in der Lagerschicht übereinstimmen,
- Glühen des Zwischenschichtbandes bei 400 - 500°C bei einer Zeitdauer von 10-14 Stunden und Glühen des Lagerschichtbandes bei einer Temperatur von 400 - 600°C über eine Zeitdauer von 10-24 Stunden,
- Abwalzen des Zwischenschichtbandes auf Plattierdicke,
- Glühen des Zwischenschichtbandes bei 250 - 350°C über 8 - 14h,
- Walzplattieren zum Verbinden der Zwischenschicht- und Lagerschichtbänder zur Herstellung eines Verbundes,
- Walzen des Verbundes auf die gewünschte Plattierdicke,
- Walzplattieren des Verbundes auf eine Stahlstützschicht zur Herstellung des Verbundwerkstoffes und
- Glühen des Verbundwerkstoffes bei 250 - 350°C über 10 - 24h.

18. Verfahren nach Anspruch 17,
**dadurch gekennzeichnet, dass** im Rahmen des Abwalzens des Zwischenschichtbandes auf Plattierdicke ein Glühen bei 400 - 600°C über 10 - 14h durchgeführt wird.

19. Verfahren nach einem der Ansprüche 17 oder 18,
**dadurch gekennzeichnet, dass** nach dem Walzen des Verbundes auf die gewünschte Plattierdicke ein Glühen bei 250 - 350°C über 10 - 24h durchgeführt wird.

20. Verfahren nach einem der Ansprüche 17 bis 19,
**dadurch gekennzeichnet, dass** das Zwischenschichtband mit einer Dicke zwischen 35 μm und <50 μm hergestellt wird.

## Claims

1. Plain bearing composite material having a metal support layer, an intermediate layer of an aluminium alloy and a bearing layer of an aluminium alloy, wherein the alloy components of the aluminium alloys of the intermediate layer and bearing layer correspond with the exception of an additional soft phase portion in the bearing layer,
**characterised in that**
the aluminium alloys of the intermediate layer and bearing layer have from 1.0 to 3% by weight of nickel, from 0.5 to 2.5% by weight of manganese, from 0.02 to 1.5% by weight of copper, balance aluminium with the usual permissible impurities, wherein the aluminium alloy of the bearing layer further has the soft phase portion.

2. Plain bearing composite material according to claim 1,
**characterised in that**
the quantities of the alloy components of the aluminium alloy of the intermediate layer and the aluminium alloy of the bearing layer correspond with the exception of the additional soft phase portion in the bearing layer, wherein the soft phase portion in the bearing layer is at the expense of the aluminium portion in the aluminium alloy.

3. Plain bearing composite material according to claim 1 or 2,
**characterised in that** the soft phase portion comprises lead, tin and/or bismuth.

4. Plain bearing composite material according to any one of claims 1 to 3,
**characterised in that** the soft phase portion is from 5 to 20% by weight.

5. Plain bearing composite material according to claim 4,
**characterised in that** the soft phase portion is from 8 to 15% by weight.

6. Plain bearing composite material according to any one of claims 1 to 5,
**characterised in that** the soft phase portion is > 8 to 12% by weight.

7. Plain bearing composite material according to any one of claims 1 to 6,
**characterised in that** the proportion of the tin is from 9 to 11% by weight.

8. Plain bearing composite material according to any one of claims 1 to 7,
**characterised in that** the intermediate layer has hard particles having diameters of from 1 to 10 μm and the bearing layer has hard particles having diameters of from 1 to 15 μm.

9. Plain bearing composite material according to claim 8,
**characterised in that** the proportion of the hard particles having diameters up to 10 μm in the intermediate layer is up to 95% and **in that** the proportion of the hard particles having diameters up to 15 μm in the bearing layer is up to 95%.

10. Plain bearing composite material according to either claim 8 or claim 9,
**characterised in that** the hard particles comprise Si particles and intermetallic phases of Al-Ni, Al-Ni-Mn or Al-Mn.

11. Plain bearing composite material according to any one of claims 1 to 10,
**characterised in that** the thickness of the intermediate layer is from 15 to 60 μm.

12. Plain bearing composite material according to claim 11,
**characterised in that** the thickness of the intermediate layer is from 35 to < 50 μm.

13. Plain bearing composite material according to any one of claims 1 to 12,
**characterised in that** the thickness of the intermediate layer is from 5 to 20% of the bearing layer thickness.

14. Plain bearing composite material according to claim 13,
**characterised in that** the thickness of the intermediate layer is from 7 to 17% of the bearing layer thickness.

15. Plain bearing composite material according to any one of claims 1 to 14,
**characterised in that** between the intermediate layer and the bearing layer there is a roll bonding connection.

16. Plain bearing composite material according to any one of claims 1 to 15,
**characterised in that** between the intermediate layer and the metal support layer there is a roll bonding connection.

17. Method for producing a plain bearing composite material having a metal support layer, an intermediate layer of an aluminium alloy and a bearing layer of an aluminium alloy,
**characterised by** the following method steps:
- strip casting the aluminium alloys for intermediate layer in order to produce an intermediate layer strip,
- subsequently strip casting the aluminium alloy for the bearing layer in order to produce a bearing layer strip on the same casting installation, wherein the alloy components of the aluminium alloys of the intermediate layer and bearing layer correspond with the exception of an additional soft phase portion in the bearing layer,
- annealing the intermediate layer strip at from 400 to 500°C for a time period of from 10 to 14 hours and annealing the bearing layer strip at a temperature of from 400 to 600°C over a time period of from 10 to 24 hours,
- rolling the intermediate layer strip to bonding thickness,
- annealing the intermediate layer strip at from 250 to 350°C over from 8 to 14 hours,
- roller bonding in order to connect the intermediate layer and bearing layer strips in order to produce a compound,
- rolling the compound to the desired bonding thickness,
- roller bonding the compound to a steel support layer in order to produce the composite material, and
- annealing the composite material at from 250 to 350°C over from 10 to 24 hours.

18. Method according to claim 17,
**characterised in that**, in the context of rolling the intermediate layer strip to a bonding thickness, an annealing operation is carried out at from 400 to 600°C over from 10 to 14 hours.

19. Method according to either claim 17 or 18,
**characterised in that**, after the rolling of the compound to the desired bonding thickness, an annealing operation is carried out at from 250 to 350°C over from 10 to 24 hours.

20. Method according to any one of claims 17 to 19,
**characterised in that** the intermediate layer strip is produced with a thickness between 35 μm and <50 μm.

## Revendications

1. Matériau composite de palier à glissement comportant une couche support métallique, une couche intermédiaire composée d'un alliage d'aluminium et une couche palier composée d'un alliage d'aluminium, les composants d'alliage des alliages d'aluminium de la couche intermédiaire et de la couche palier étant identiques à l'exception d'une fraction de phase souple supplémentaire dans la couche palier,
**caractérisé en ce**
**que** les alliages d'aluminium de la couche intermédiaire et de la couche palier présentent de 1,0 à 3 % en poids de nickel, de 0,5 à 2,5 % en poids de manganèse, de 0,02 à 1,5 % en poids de cuivre, le reste étant de l'aluminium avec les impuretés admissibles habituelles, l'alliage d'aluminium de la couche palier présentant en plus la fraction de phase souple.

2. Matériau composite de palier à glissement selon la revendication 1,
**caractérisé en ce**
**que** les quantités des composants d'alliage de l'alliage d'aluminium de la couche intermédiaire et de l'alliage d'aluminium de la couche palier sont identiques à l'exception de la fraction de phase souple supplémentaire dans la couche palier, la fraction de phase souple dans la couche palier allant aux dépens de la fraction d'aluminium dans l'alliage d'aluminium.

3. Matériau composite de palier à glissement selon la revendication 1 ou la revendication 2,
**caractérisé en ce que** la fraction de phase souple comprend du plomb, de l'étain et/ou du bismuth.

4. Matériau composite de palier à glissement selon l'une des revendications 1 à 3,
**caractérisé en ce que** la fraction de phase souple représente 5 à 20 % en poids.

5. Matériau composite de palier à glissement selon la revendication 4,
**caractérisé en ce que** la fraction de phase souple représente 8 à 15 % en poids.

6. Matériau composite de palier à glissement selon l'une des revendications 1 à 5,
**caractérisé en ce que** la fraction de phase souple représente > 8 à 12 % en poids.

7. Matériau composite de palier à glissement selon l'une des revendications 1 à 6,
**caractérisé en ce que** la fraction d'étain représente 9 à 11 % en poids.

8. Matériau composite de palier à glissement selon l'une des revendications 1 à 7,
**caractérisé en ce que** la couche intermédiaire présente des particules dures avec des diamètres de 1 à 10 μm et la couche palier des particules dures avec des diamètres de 1 à 15 μm.

9. Matériau composite de palier à glissement selon la revendication 8,
**caractérisé en ce que** la fraction de particules dures avec des diamètres allant jusqu'à 10 μm dans la couche intermédiaire va jusqu'à 95 % et que la fraction de particules dures avec des diamètres allant jusqu'à 15 μm dans la couche palier va jusqu'à 95%.

10. Matériau composite de palier à glissement selon l'une des revendications 8 ou 9,
**caractérisé en ce que** les particules dures comprennent des particules de Si et des phases intermétalliques d'Al-Ni, Al-Ni-Mn ou Al-Mn.

11. Matériau composite de palier à glissement selon l'une des revendications 1 à 10,
**caractérisé en ce que** l'épaisseur de la couche intermédiaire est de 15 à 60 μm.

12. Matériau composite de palier à glissement selon la revendication 11,
**caractérisé en ce que** l'épaisseur de la couche intermédiaire est de 35 à < 50 μm.

13. Matériau composite de palier à glissement selon l'une des revendications 1 à 12,
**caractérisé en ce que** l'épaisseur de la couche intermédiaire est de 5 à 20 % de l'épaisseur de la couche palier.

14. Matériau composite de palier à glissement selon la revendication 13,
**caractérisé en ce que** l'épaisseur de la couche intermédiaire est de 7 à 17 % de l'épaisseur de la couche palier.

15. Matériau composite de palier à glissement selon l'une des revendications 1 à 14,
**caractérisé en ce qu'**il existe une liaison par placage par laminage entre la couche intermédiaire et la couche palier.

16. Matériau composite de palier à glissement selon l'une des revendications 1 à 15,
**caractérisé en ce qu'**il existe une liaison par placage par laminage entre la couche intermédiaire et la couche support métallique.

17. Procédé de production d'un matériau composite de palier à glissement comportant une couche support métallique, une couche intermédiaire composée d'un alliage d'aluminium et une couche palier composée d'un alliage d'aluminium,
**caractérisé par** les étapes suivantes :
- coulage en bande de l'alliage d'aluminium pour la couche intermédiaire pour produire une bande de couche intermédiaire,
- ensuite coulage en bande de l'alliage d'aluminium pour la couche palier pour produire une bande de couche palier sur la même installation de coulée, les composants d'alliage des alliages d'aluminium de la couche intermédiaire et de la couche palier étant identiques à l'exception d'une fraction de phase souple supplémentaire dans la couche palier,
- recuit de la bande de couche intermédiaire à 400 - 500 °C pendant une durée de 10 à 14 heures et recuit de la bande de couche palier à une température de 400 à 600 °C pendant une durée de 10 à 24 heures,
- laminage de la bande de couche intermédiaire à l'épaisseur de placage,
- recuit de la bande de couche intermédiaire à 250 - 350 °C pendant 8 à 14 heures,
- placage par laminage pour lier les bandes de couche intermédiaire et de couche palier pour produire un composite,
- laminage du composite à l'épaisseur de placage souhaitée,
- placage par laminage du composite sur une couche support en acier pour produire le matériau composite et
- recuit du matériau composite à 250 - 350 °C pendant 10 à 24 heures.

18. Procédé selon la revendication 17,
**caractérisé en ce que** dans le cadre du laminage de la bande de couche intermédiaire à l'épaisseur de placage, on effectue un recuit à 400 - 600 °C pendant 10 à 14 heures.

19. Procédé selon l'une des revendications 17 ou 18,
**caractérisé en ce qu'**après le laminage du composite à l'épaisseur de placage souhaitée, on effectue un recuit à 250 - 350 °C pendant 10 à 24 heures.

20. Procédé selon l'une des revendications 17 à 19,
**caractérisé en ce que** la bande de couche intermédiaire est produite avec une épaisseur comprise entre 35 μm et < 50 μm.
